## Europäisches Patentamt
## European Patent Office
## Office européen des brevets

(19)

(11) Publication number: **0 140 562**
**B1**

(12)

# EUROPEAN PATENT SPECIFICATION

(45) Date of publication of patent specification: **25.11.87**

(51) Int. Cl.⁴: **A 63 H 30/00**

(21) Application number: **84306359.5**

(22) Date of filing: **18.09.84**

(54) A rechargeable wireless-control toy.

(30) Priority: **02.11.83 JP 169229/83 u**

(43) Date of publication of application:
**08.05.85 Bulletin 85/19**

(45) Publication of the grant of the patent:
**25.11.87 Bulletin 87/48**

(84) Designated Contracting States:
**AT BE CH DE FR GB IT LI LU NL SE**

(56) References cited:
**DE-A-2 033 597**
**FR-A-2 086 130**
**US-A-2 832 177**
**US-A-3 115 724**
**US-A-3 603 861**
**US-A-3 896 364**

(73) Proprietor: **NIKKO Co., Ltd.**
**No. 15-15 Kameari 5-chome Katsushika-ku**
**Tokyo (JP)**

(72) Inventor: **Ohtake, Tsuneo c/o Nikko Co., Ltd.**
**No. 15-15 Kameari 5-chome**
**Katsushika-ku Tokyo (JP)**

(74) Representative: **Allman, Peter John et al**
**MARKS & CLERK Suite 301 Sunlight House**
**Quay Street**
**Manchester M3 3JY (GB)**

Courier Press, Leamington Spa, England.

EP 0 140 562 B1

## Description

This invention relates to a rechargeable wireless controllable toy including a remote control unit comprising a wireless transmitter and a first battery; and a toy racer comprising a wireless receiver receiving a control signal from the transmitter for controlling the racer, and a rechargeable second battery.

In a convenient wireless-controlled toy racer, it is known to power the receiver, a driving motor, and a steering mechanism with a nickel-cadmium battery.

The driving motor of such a toy racer consumes the highest amount of power. Thus, if the power source for the driving motor is used also to power the receiver and to control the steering mechanism, a decrease in the capacity of the battery due to its continuous discharge may lead to the receiver and the steering mechanism failing to operate normally. For this reason, in a toy racer utilizing conventional dry cells, depleted cells must be replaced frequently and uneconimically.

On the other hand, a type of toy racer is known in which a power source for the control system (such as the receiver and other components) is arranged independently and separately from a power source for the driving motor. In this case, however, depletion of the power sources cannot be correctly and conveniently discriminated from each other.

In view of the foregoing, a rechargeable battery has been utilized for the power source of the driving motor and the control system, the toy racer incorporating a recharging connector terminal to which a power source can be connected. A toy racer containing such a battery, however, requires a separate power source for recharging the battery. Unfortunately, an AC adaptor of the type which must be connected to a commercial power source may not be utilized outdoors. Thus, it is inconvenient to provide a toy racer with a power source containing a rechargeable battery.

It is an object of the present invention to obviate or mitigate the above problem.

In accordance with the invention, there is provided a rechargeable wireless controllable toy including a remote control unit comprising a wireless transmitter and a first battery, and a toy racer comprising a wireless receiver receiving a control signal from the transmitter for controlling the racer, a rechargeable second battery, and a recharging connector terminal therefor, characterized in that the remote control unit is provided with a charging terminal which is connected to the first battery and which is connectible to the recharging connector terminal of the toy racer.

Thus, in accordance with the invention, the power source (the first battery) of the wireless transmitter is utilized as a recharging power source for the battery (the second battery) of the toy racer, the function of the transmitter thus being expanded.

In a preferred embodiment of the invention, the first battery comprises a plurality of dry cells which are connectible by a switch either in series to a transmitting ciruit or in parallel to the charging connector terminal. Thus, the capacity of the power source may in increased upon recharging. Further, dry cells of the first battery and the second battery are preferably connectible through a recharging plug and a recharging socket, the wireless transmitter being provided with a recharging switch and the wireless receiver being provided with a contact and a receiving circuit, the contact disconnecting the receiving circuit when the recharging plug and recharging socket are interconnected.

Embodiments of the invention are described hereinbelow with reference to the accompanying drawings, in which:—

Figure 1 is a schematic view of one embodiment of a remote control unit and a toy racer according to the invention;

Figure 2 illustrates the basic circuit of the embodiment of Fig. 1;

Figure 3 illustrates a preferred power circuit for the embodiment of Figs. 1 and 2; and,

Figure 4 illustrates a power circuit of another embodiment of the present invention.

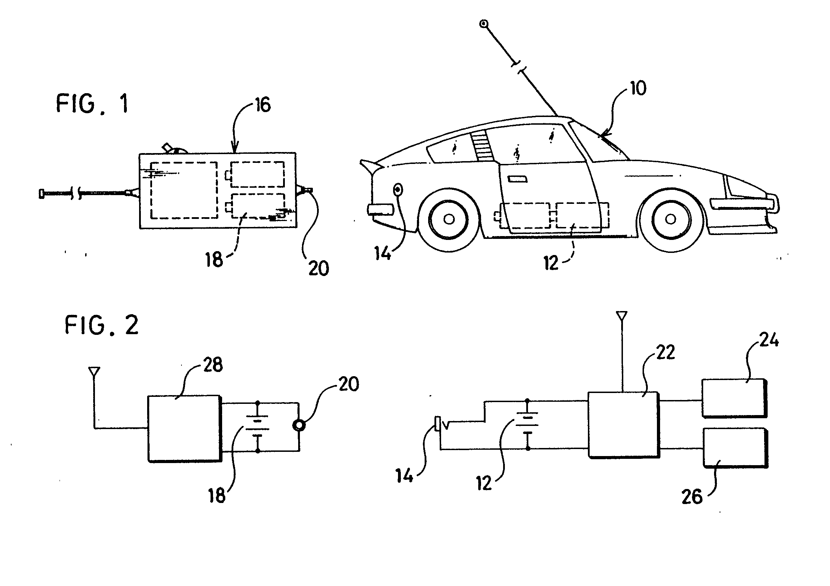

Figure 1 shows one embodiment of the invention, in which a toy racer 10 contains a driving motor (not shown), a wireless receiver and a steering mechanism. Further, the toy racer 10 utilises a nickel-cadmium battery 12 as the power source and at its outer side wall is provided with a jack 14 which serves as a recharging connector terminal and is connected to the battery 12. A wireless transmitter 16 is also provided for controlling the toy racer 10, the transmitter accommodating replaceable dry cells 18 to serve as its power source, and being provided at its outer side with a plug 20 serving as a charging terminal. The plug 20 is connected to the cells 18. Thus, in accordance with the invention, the recharging plug 20 of the wireless transmitter 16 may be connected to the recharging jack 14 on the toy racer 10, thereby to allow a first battery (cells 18) of the wireless transmitter 16 to recharge a second battery (battery 12) of the toy racer 10.

Figure 2 shows a basic power circuit for the embodiment as shown in Fig. 1, in which numerical reference 22 represents a receiving circuit of the wireless receiver contained in the toy racer 10, through which circuit 22 the nickel-cadmium battery 12 is provided as a common power source for a driving motor 24 and a steering mechanism 26, as well as for the receiving circuit 22. Further, the battery 12 is connected to the normally open recharging jack 14. Numerical reference 28 represents a transmitting circuit of the wireless transmitter 16, the power source for which circuit comprises the dry cells 18 connected to the recharging plug 20. Thus, as is apparent from Fig. 2, the connection of the plug 20 to the jack 14 ensures the connection of the dry cells 18 to the battery 12 for recharging the latter.

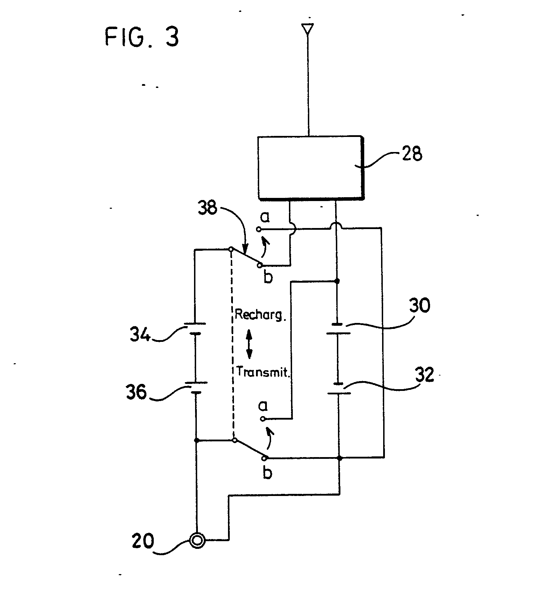

Figure 3 shows a most preferable power circuit for the wireless transmitter when used in the wireless-control toy racer according to the invention. In this embodiment, four dry cells 30, 32, 34, 36 (1.5 V each) are used, for example, as the power source for the transmitting circuit 28 of the wireless transmitter, in which the pairs of dry cells 30, 32 and 34, 36 are connected in series. When connected to the transmitting circuit 28 through a switch 38, all the dry cells are connected in series, while they are connected in parallel when connected to the recharging plug 20. In this case, the switch 38 is connected to contacts (a) for connecting in parallel the cells 30, 32 and 34, 36 when the plug 20 is conencted to the jack 14 of the toy racer 10 (see Figs. 1 and 2), while the separation of the plug 20 from the jack 14 allows the switch 38 to be connected to the other contacts (b) for connecting the cells 30, 32, 34 and 36 in series.

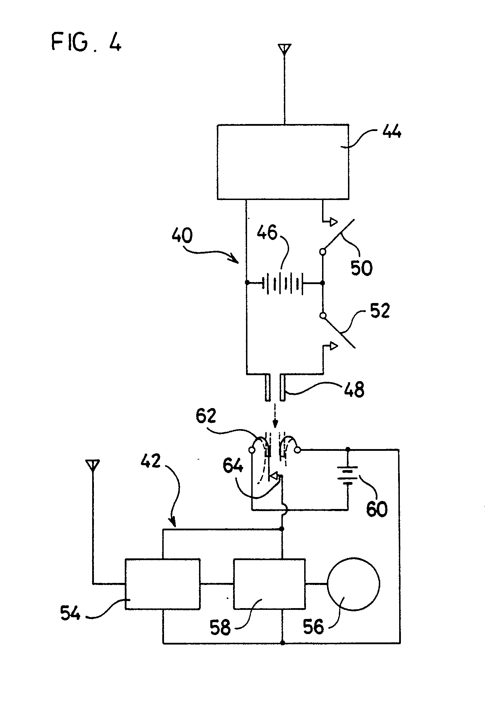

The power circuit of the wireless transmitter thus constructed enables the capacity of the toy racer power source to be increased upon recharging, thereby to improve the recharging efficiency. Figure 4 shows a power circuit of another embodiment of the invention, wherein a reference 40 represents the wireless transmitter circuit while a reference 42 represents the wireless receiver circuit. The wireless transmitter circuit 40 comprises a transmitting circuit 44, a first battery in the form of power dry cells 46 and a recharging plug 48. The transmitting circuit 44 and the power dry cells 46 are connected through a transmitting switch 50, while the recharging plug 48 and the power dry cells 46 are connected through another recharging switch 52.

The wireless receiver circuit 42 comprises a receiving circuit 54, a driving motor 56, a motor-driving circuit 58, a second battery in the form of storage battery 60, and a recharging socket 62. The power battery 60 may be connected switchably through a contact 64 of the recharging socket 62 to either the receiving circuit 54, the driving motor 56 and the motor-driving circuit 58 on one hand or to the recharging plug 48 of the wireless transmitter circuit 40 on the other hand.

In accordance with the embodiment of Fig. 4, when the recharging plug 48 of the wireless transmitter circuit 40 is connected to the recharging socket 62 of the wireless receiver circuit 42, the contact 64 is disconnected and the power storage battery 60 of the receiver circuit 42 is connected only to the power dry cells 46 of the transmitter circuit 40. Then, the recharging switch 52 is switched on to recharge the storage battery 60 through the dry cells 46. Thereafter, disconnection of the recharging plug 48 of the transmitter circuit 40 from the recharging socket 62 of the receiver circuit 42 connects the contact 64, thereby to connect the storage battery 60 to the receiving circuit 54, the driving motor 56 and the motor-driving circuit 58. In this condition, the transmitting switch 50 of the receiver circuit 40 may be switched on to transmit an instruction signal from the transmitting circuit 44 to the receiving circuit 54 for the controlling the motor-driving circuit 58 and thus operation of the driving motor 56.

It will be appreciated from the foregoing that in accordance with the invention the battery is used as the power source for the wireless-control toy racer which is provided with the recharging connector terminal (recharging jack) while the power source of the wireless transmitter is utilized for the recharging power source, so that a special recharging power source is not required for recharging the battery of the toy racer, resulting in the convenient and economical operation.

Particularly, the wireless transmitter consumes relatively little power, so that the utilization of the dry cells contained therein as a recharging power source produces a very convenient portable wireless-controlled toy racer.

**Claims**

1. A rechargeable wireless controllable toy including a remote control unit comprising a wireless transmitter (16, 40) and a first battery (18, 46); and a toy racer (10) comprising a wireless receiver (22, 42) receiving a control signal from the transmitter (16, 40) for controlling the racer (10), a rechargeable second battery (12, 60), and a recharging connected terminal (14, 62) therefor, chracterised in that the remote control unit is provided with a charging terminal (20, 48) which is connected to the first battery (18, 46) and which is connectible to the recharging connector terminal (14, 62) of the toy racer (10).

2. A toy according to claim 1, wherein the first battery comprises a plurality of dry cells (30, 32, 34, 36) which are connectible by a switch (38) in series to a transmitting circuit (28) or are connectible by the switch (38) in parallel to the charging terminal (20).

3. A toy according to claim 1, wherein the first battery (46) comprises dry cells and the second battery (60) comprises a storage battery, the first and second batteries being connectible through a recharging plug (48) and a recharging socket (62), and wherein the wireless transmitter (40) is provided with a recharging switch (52) and the wireless receiver (42) is provided with a contract (64) and a receiving circuit (54), the contact (64) disconnecting the receiving circuit (54) when the recharging plug (48) and recharging socket (62) are interconnected.

**Patentansprüche**

1. Aufladbares Spielzeug mit drahtloser Steuerung, das ein Fernsteuergerät mit einem drahtlosen Sender (16, 40) und einer ersten Batterie (18, 46), und ein Spielzeugauto (10) mit einem drahtlosen Empfänger (22, 42), der zum Steuern des Autos (10) ein Steuersignal vom Sende (16, 40) empfängt, einer aufladbaren zweiten Batterie (12, 60) und einem Auflade-Verbinderanschluß (14, 62) hierfür umfaßt, dadurch gekennzeichnet, daß das Fernsteuergerät mit einem an die erste Batterie (18, 46) angeschlossenen Ladeanschluß (20, 48) versehen ist, der mit dem Auflade-Verbinderanschluß (14, 62) des Spielzeugautos (10) verbindbar ist.

2. Spielzeug nach Anspruch 1, dadurch gekennzeichnet, daß die erste Batterie eine Vielzahl von Trockenzellen (30, 32, 34, 36) umfaßt, die mittels eines Schalters (38) in Reihe mit einer Sendeschaltung (28) oder mittels des Schalters (38) parallel mit dem Aufladeanschluß (20) verbindbar sind.

3. Spielzeug nach Anspruch 1, dadurch gekennzeichnet, daß die erste Batterie (46) Trockenzellen und die zweite Batterie (60) einen Akkumulator umfaßt, wobei die erste und die zweite Batterie über einen Aufladestecker (48) und eine Aufladebuchse (62) miteinander verbindbar sind, und daß der drahtlose Sender (40) mit einem Aufladeschalter (52) und der drahtlose Empfänger (42) mit einem Kontaktstück (64) und einer Empfangschaltung (54) ausgestattet sind, wobei das Kontaktstück (64) die Empfangsschaltung (54) abschaltet, wenn der Aufladestecker (48) und die Aufladebuchse (62) miteinander verbunden sind.

## Revendications

1. Jouet rechargeable à commande sans fil comprenant un ensemble de commande à distance comportant un émetteur (16, 40) sans fil et une première batterie (18, 46) et un jouet de course (10) comprenant un récepteur sans fil (22, 42) recevant un signal de commande en provenance de l'émetteur (16, 40) pour commander le jouet de course (10), une seconde batterie rechargeable (12, 60) et une borne de connexion de recharge (14, 62) pour celle-ci, caractérisé en ce que l'ensemble de commande à distance est pourvu d'une borne de charge (20, 48) qui est reliée à la première batterie (18, 46) et qui peut être connectée à la borne (14, 62) de connecteur de recharge du jouet de course (10).

2. Jouet suivant la revendication 1, dans lequel la première batterie est constituée par plusieurs piles sèches (30, 32, 34, 36) qui peuvent être reliées par un commutateur (38) en série à un circuit émetteur (28) ou peuvent être reliées par le commutateur (38) en parallèle avec la borne (20) de recharge.

3. Jouet suivant la revendication 1, dans lequel la première batterie (46) est constituée par des piled sèches et la seconde batterie (60) est constituée par une batterie d'accumulateurs, les première et seconde batteries pouvant être reliées par l'intermédiaire d'une fiche (48) de recharge et d'une douille (62) de recharge, et dans lequel l'émetteur sans fil (40) est pourvu d'un commutateur (52) de recharge, le récepteur sans fil (42) étant pourvu d'un contact (64) et d'un circuit récepteur (54), le contact (64) déconnectant le circuit récepteur (54) lorsque la fiche (48) de recharge et la douille (62) de recharge sont reliées entre elles.

FIG. 1

FIG. 2

0 140 562

FIG. 3

28

38

a
b

34

Recharg.

Transmit.

30

36

a
b

32

20

FIG. 4